(19) Europäisches Patentamt / European Patent Office / Office européen des brevets

(11) **EP 3 070 946 A1**

(12) **EUROPEAN PATENT APPLICATION**

(43) Date of publication:
**21.09.2016 Bulletin 2016/38**

(51) Int Cl.:
**H04N 19/56** *(2014.01)*

(21) Application number: **16159632.5**

(22) Date of filing: **10.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.03.2015 JP 2015055262**

(71) Applicant: **FUJITSU LIMITED**
**Kawasaki-shi,**
**Kanagawa 211-8588 (JP)**

(72) Inventor: **YAMADA, Kohji**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **SEARCH REGION DETERMINATION FOR INTRA BLOCK COPY IN VIDEO CODING**

(57) An image processing device(200) compares blocks included in a first frame and a coding target block included in a second frame to calculate predicted errors, and acquires the position of a first candidate predicted block included in the first frame and the position of a second candidate predicted block based on the predicted errors, calculates a vector linking the position of the first candidate predicted block and the position of the second candidate predicted block and searches for a predicted block corresponding to the coding target block from the position of the vector with a starting point at the position of the coding target block as the position for starting search.

## FIG.2

**Description**

FIELD

The embodiments discussed herein are related to an image processing device and others.

BACKGROUND

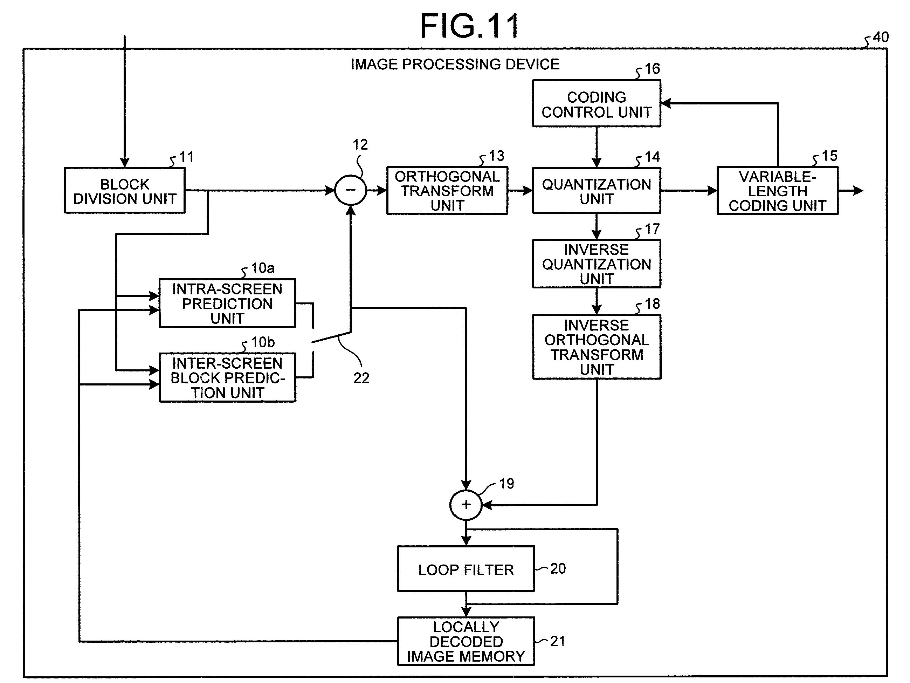

An image processing device in conformity with international standards for image coding, MPEG-4 (ISO/IEC 14496-10|ITU-T H.264) and HEVC (High Efficiency Video Coding, ISO/IEC 23008-2|ITU-T H.265) is configured as illustrated in FIG. 11, for example.

FIG. 11 is a diagram (1) illustrating a configuration of a conventional image processing device. As illustrated in FIG. 11, an image processing device 40 has an intra-screen prediction unit 10a and an inter-screen block prediction unit 10b. The image processing device 40 also has a block division unit 11, a subtractor 12, an orthogonal transform unit 13, a quantization unit 14, a variable-length coding unit 15, and a coding control unit 16. The image processing device 40 has an inverse quantization unit 17, an inverse orthogonal transform unit 18, an adder 19, a loop filter 20, a locally decoded image memory 21, and a switch 22.

In the following description, a block as a coding target will be designated as a coding target block, and a frame including a coding target block will be designated as a coding target frame. In addition, a frame searched for an inter-screen predicted block by the inter-screen block prediction unit will be designated as a reference frame.

The intra-screen prediction unit 10a is a processing unit that calculates a predicted block from peripheral pixels of the coding target block. The process of calculating the predicted block by the intra-screen prediction unit 10a will be approximately designated as "intra-screen prediction process". When the switch 22 is connected to the intra-screen prediction unit 10a, the intra-screen prediction unit 10a outputs the calculated predicted block to the subtractor 12.

The inter-screen block prediction unit 10b is a processing unit that specifies from the reference frame a block with a smaller error as compared to the coding target block and specifies the specified block as a predicted block. The process of specifying the predicted block by the inter-screen block prediction unit 10b will be appropriately designated as "inter-screen block prediction process". When the switch 22 is connected to the inter-screen block prediction unit 10b, the inter-screen block prediction unit 10b outputs the calculated predicted block to the subtractor 12.

The block division unit 11 is a processing unit that, upon receipt of an original image frame, divides the original image frame into rectangular blocks as coding units to generate original image blocks. The block division unit 11 outputs the original image blocks to the intra-screen prediction unit 10a, the inter-screen block prediction unit 10b, and the subtractor 12.

The subtractor 12 is a processing unit that, when acquiring the original image block and the predicted block, subtracts the predicted block from the original image block to generate a predicted error block. The predicted error block is a block in which spatial and temporal redundancy are removed from the original image block. The subtractor 12 outputs the predicted error block to the orthogonal transform unit 13.

The orthogonal transform unit 13 is a processing unit that performs frequency transform on the predicted error block to reduce redundancy, taking advantage of high spatial correlation, thereby to transform the predicted error block into transform coefficients. The orthogonal transform unit 13 outputs the transform coefficients to the quantization unit 14.

The quantization unit 14 is a processing unit that quantizes the transform coefficients to generate quantized transform coefficients. The quantization unit 14 outputs the quantized transform coefficients to the variable-length coding unit 15 and the inverse quantization unit 17. The quantization unit 14 controls the fineness of values in quantization based on the quantization value output from the coding control unit 16.

The variable-length coding unit 15 is a processing unit that performs variable-length coding on the quantized transform coefficients to generate a coded stream. The variable-length coding unit 15 outputs the coded stream to an external device such as a decoder. The variable-length coding unit 15 also outputs to the coding control unit 16 information on a bandwidth assigned for output of the coded stream as amount of generated information.

The coding control unit 16 calculates the quantization value from the amount of generated information and outputs the calculated quantization values to the quantization unit 14.

The inverse quantization unit 17 is a processing unit that performs inverse quantization to transform the quantized transform coefficients to an inversely quantized transform coefficients. The inversely quantized transform coefficients constitutes information corresponding to the transform coefficients output from the orthogonal transform unit 13. The inverse quantization unit 17 outputs the inversely quantized transform factor to the inverse orthogonal transform unit 18.

The inverse orthogonal transform unit 18 is a processing unit that performs inverse frequency transform to transform the inversely quantized transform coefficients to a predicted error decoded block. The predicted error decoded block constitutes information corresponding to the predicted error block output from the subtractor 12. The inverse orthogonal transform unit 18 outputs the predicted error decoded block to the adder 19.

The adder 19 is a processing unit that adds up the predicted block and the predicted error decoded block. The adder 19 outputs the generated block to the loop filter 20 and the locally decoded image memory 21.

The loop filter 20 is a processing unit that receives the block from the adder 19 and applies a de-blocking filter for smoothing out asperities between joined blocks to generate a locally decoded image. The loop filter 20 outputs the locally decoded image to the locally decoded image memory 21.

The locally decoded image memory 21 is a storage unit that stores the decoded block images from the adder 19 and the locally decoded images from the loop filter 20. The decoded block images that are output from the adder 19 and stored in the locally decoded image memory 21 are referred to by the intra-screen prediction unit 10a. The locally decoded images that are output from the loop filter and stored in the locally decoded image memory 21 are referred to by the inter-screen block prediction unit 10b. For example, the locally decoded images are equivalent to local images out of images decoded by the decoder receiving the coded stream.

In HEVC standardization, extended standards for screen content has been increasingly developed. The screen content is moving images mainly based on two-dimensional and three-dimensional graphics on PC desktop screens, for example. The screen content is different in property from natural images taken by cameras, and some coding tools for screen content are studied and one of them is intra-screen block copy (intra block copy (IBC)).

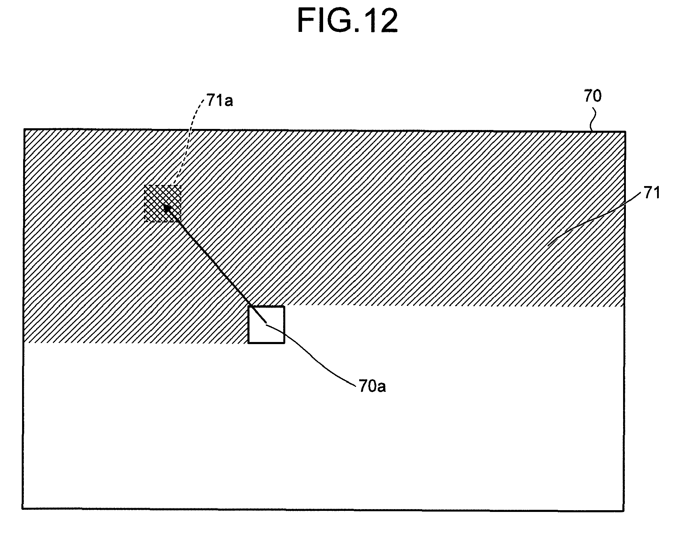

FIG. 12 is a diagram describing IBC. The IBC takes advantage of the tendency that a plurality of patterns of the same shape such as fonts and textures exists in frames of screen content. FIG. 12 describes the case where a coding target block 70a in a coding target frame 70 is coded as an example. For instance, the width of the coding target block 70a has N pixels and the height of the same has M pixels. A region 71 in the coding target frame is a coded region.

In the IBC, the coding target block 70a is compared to the blocks in the region 71 and the block with the smallest difference from the coding target block is specified as a reference block. In the example of FIG. 12, a block 71a is set as the reference block. In the IBC, the relative positions of the coding target block 70a and the reference block 71a and the differential value between the two blocks are coded.

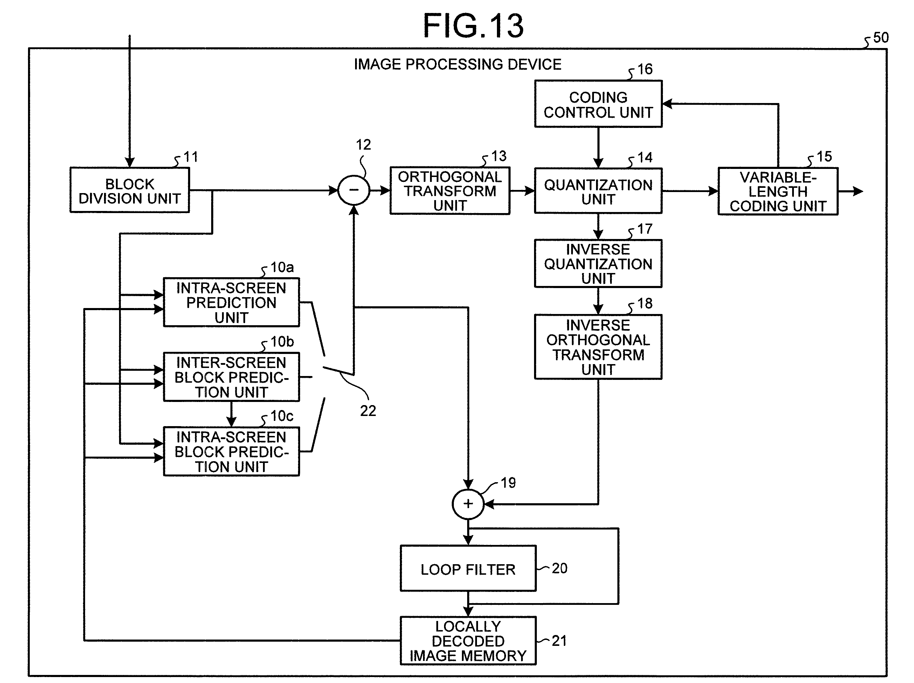

The image processing device using the IBC described above with reference to FIG. 12 is configured as illustrated in FIG. 13, for example. FIG. 13 is a diagram (2) illustrating a configuration of a conventional image processing device. As illustrated in FIG. 13, an image processing device 50 has the intra-screen prediction unit 10a, the inter-screen block prediction unit 10b, and an intra-screen block prediction unit 10c. The image processing device 50 also has the block division unit 11, the subtractor 12, the orthogonal transform unit 13, the quantization unit 14, the variable-length coding unit 15, and the coding control unit 16. The image processing device 50 has the inverse quantization unit 17, the inverse orthogonal transform unit 18, the adder 19, the loop filter 20, the locally decoded image memory 21, and the switch 22.

Descriptions of the processing units 11 to 22

illustrated in FIG. 13 are the same as the descriptions of the processing units 11 to 22 illustrated in FIG. 11 and are thus omitted.

The intra-screen prediction unit 10a is a processing unit that executes the intra-screen prediction process described with reference to FIG. 11. The inter-screen block prediction unit 10b is a processing unit that executes the inter-screen block prediction process described with reference to FIG. 11.

The intra-screen block prediction unit 10c is a processing unit that specifies the optimal block as a predicted block from the coded region in the coding target frame. The process of specifying the predicted block by the intra-screen block prediction unit 10c will be appropriately designated as "intra-screen block prediction process". When the switch 22 is connected to the intra-screen block prediction unit 10c, the intra-screen block prediction unit 10c outputs the calculated predicted block to the subtractor 12.

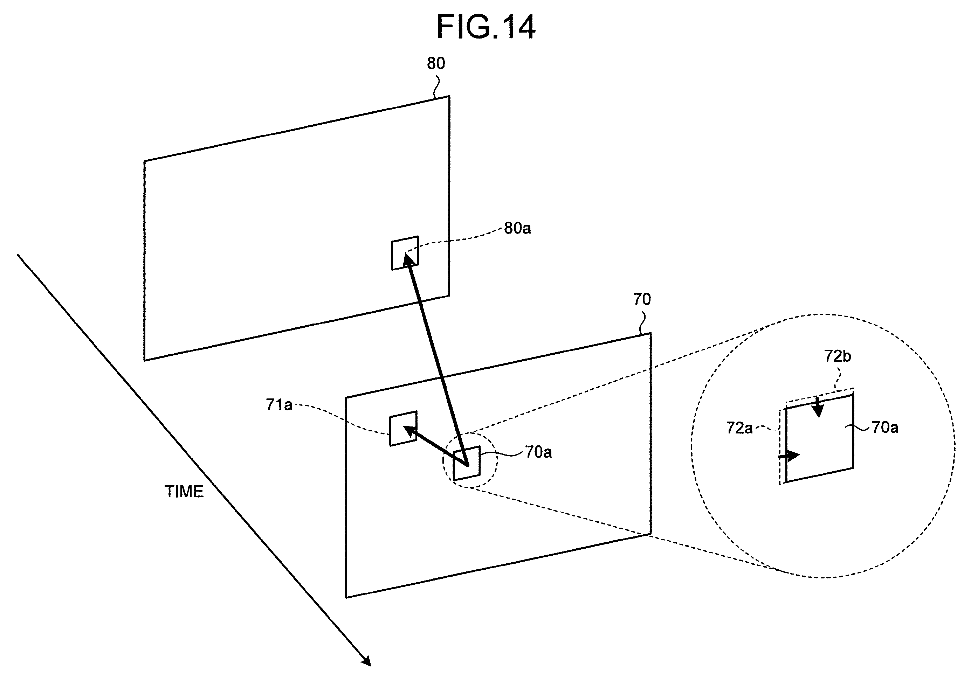

FIG. 14 is a diagram for describing the intra-screen prediction process, the inter-screen block prediction process, and the intra-screen block prediction process. First, an example of the intra-screen prediction process performed by the intra-screen prediction unit 10a will be described. The intra-screen prediction unit 10a calculates the predicted block from peripheral pixels 72a and 72b of the coding target block 70a in the coding target frame 70. For example, the intra-screen prediction unit 10a calculates the average between the pixel values of the peripheral pixels 72a and 72b as the predicted block for the coding target block 70a. Alternatively, the intra-screen prediction unit 10a may calculate the predicted block in another prediction mode according to a conventional technique.

An example of the inter-screen block prediction process performed by the inter-screen block prediction unit 10b will be described. The inter-screen block prediction unit 10b determines the block with a smaller error in a reference frame 80 as compared to the coding target block 70a, and specifies the determined block as the predicted block. For example, when the block with a smaller error as compared to the coding target block 70a is a block 80a, the predicted block is the block 80a.

An example of the intra-screen block prediction process performed by the intra-screen block prediction unit 10c will be described. The intra-screen block prediction unit 10c determines the optimal block in the coded area of the coding target frame 70 as the predicted block. The optimal block corresponds to the block with the smallest error as

EP 3 070 946 A1

compared to the coding target block 70a, for example. In the example of FIG. 14, the intra-screen block prediction unit 10c specifies the block 71a as the predicted block.

The image processing device 50 calculates coding costs for the intra-screen prediction process, the inter-screen block prediction process, and the intra-screen block prediction process, and determines the process with the lowest coding cost, and then controls the switch 22 based on the determination result. For example, the image processing device 50 calculates the coding costs by summing with weighting the predicted error and the coded data amount.

For example, the predicted error in the intra-screen prediction process is the difference between the coding target block 70a and the predicted block determined from the peripheral pixels 72a and 72b. The predicted error in the inter-screen block prediction process is the difference between the predicted block 80a and the coding target block 70a. The predicted error in the intra-screen block prediction process is the difference between the coding target block 70a and the predicted block 71a.

When the coding cost for the intra-screen prediction process is the lowest, the image processing device 50 connects the intra-screen prediction unit 10a and the switch 22. When the coding cost for the inter-screen block prediction process is the lowest, the image processing device 50 connects the inter-screen block prediction unit 10b and the switch 22. When the coding cost for the intra-screen block prediction process is the lowest, the image processing device 50 connects the intra-screen block prediction unit 10c and the switch 22.

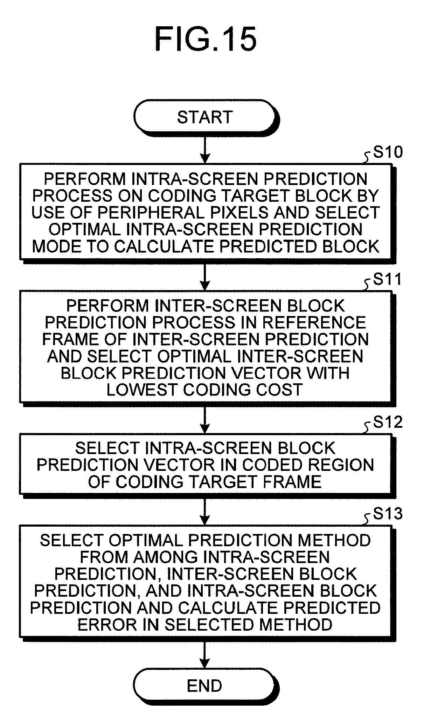

FIG. 15 is a flowchart of a process performed by a conventional image processing device. As illustrated in FIG. 15, the intra-screen prediction unit 10a of the image processing device 50 performs the intra-screen prediction process on the coding target block by use of peripheral pixels. The intra-screen prediction unit 10a selects the optimal intra-screen prediction mode and calculates the predicted block in that mode (step S10).

The inter-screen block prediction unit 10b of the image processing device 50 performs the inter-screen block prediction process in the reference frame for inter-screen prediction, and selects the optimal inter-screen block prediction vector with the lowest coding cost (step S11). At step S11, the inter-screen block prediction vector corresponds to a vector from the coding target block 70a to the block 80a illustrated in FIG. 14.

The intra-screen block prediction unit 10c of the image processing device 50 performs the intra-screen block prediction process in the coded region of the coding target frame, and selects the optimal intra-screen block prediction vector (step S12). At step S12, the intra-screen block prediction vector corresponds to a vector from the coding target block 70a to the block 71a illustrated in FIG. 14. The image processing device 50 selects the optimal prediction method from among the intra-screen prediction, the inter-screen block prediction, and the intra-screen block prediction, and calculates the predicted error by that method (step S13). These related-art examples are described, for example, in Japanese Laid-open Patent Publication No. 2011-61302.

However, the foregoing conventional technique has the problem of an increasing load of the coding process.

For example, the image processing device 50 illustrated in FIG. 13 performs the intra-screen block prediction process as an extended function to support screen content. In the intra-screen block prediction process, the search range is the coded region in one and the same frame. Accordingly, the search range may be very large depending on the positon of the coding target block in the frame, which increases the processing load of calculating the optimal block pixel region.

Accordingly, it is an object in one aspect of an embodiment of the invention to provide an image processing device, an image processing method, and an image processing program that suppress an increase in the load of the coding process.

SUMMARY

According to an aspect of an embodiment, an image processing device includes: a processor that executes a process including: comparing blocks included in a first frame and a coding target block included in a second frame to calculate predicted errors; acquiring the position of a first candidate predicted block included in the first frame and the position of a second candidate predicted block based on the predicted errors; calculating a vector linking the position of the first candidate predicted block and the position of the second candidate predicted block; and searching for a predicted block corresponding to the coding target block from the position of the vector with a starting point at the position of the coding target block as the position for starting search.

BRIEF DESCRIPTION OF DRAWINGS

FIG. 1 is a diagram for describing an example of a process performed by an image processing device according to a first embodiment;
FIG. 2 is a diagram illustrating a configuration of the image processing device according to the first embodiment;

FIG. 3 is a flowchart of the process performed by the image processing device according to the first embodiment;

FIG. 4 is a diagram for describing an example of a process performed by an image processing device according to a second embodiment;

FIG. 5 is a diagram illustrating a configuration of the image processing device according to the second embodiment;

FIG. 6 is a flowchart of the process performed by the image processing device according to the second embodiment;

FIG. 7 is a diagram for describing an example of a process performed by an image processing device according to a third embodiment;

FIG. 8 is a diagram illustrating a configuration of the image processing device according to the third embodiment;

FIG. 9 is a flowchart of the process performed by the image processing device according to the third embodiment;

FIG. 10 is a diagram illustrating an example of a computer executing an image processing program;

FIG. 11 is a diagram (1) illustrating a configuration of a conventional image processing device;

FIG. 12 is a diagram for describing IBC;

FIG. 13 is a diagram (2) illustrating a configuration of a conventional image processing device;

FIG. 14 is a diagram for describing an intra-screen prediction process, an inter-screen block prediction process, and an intra-screen block prediction process; and

FIG. 15 is a flowchart of the process performed by a conventional image processing device.

DESCRIPTION OF EMBODIMENTS

Preferred embodiments of the present invention will be explained with reference to accompanying drawings. However, the present invention is not limited to these examples.

[a] First Embodiment

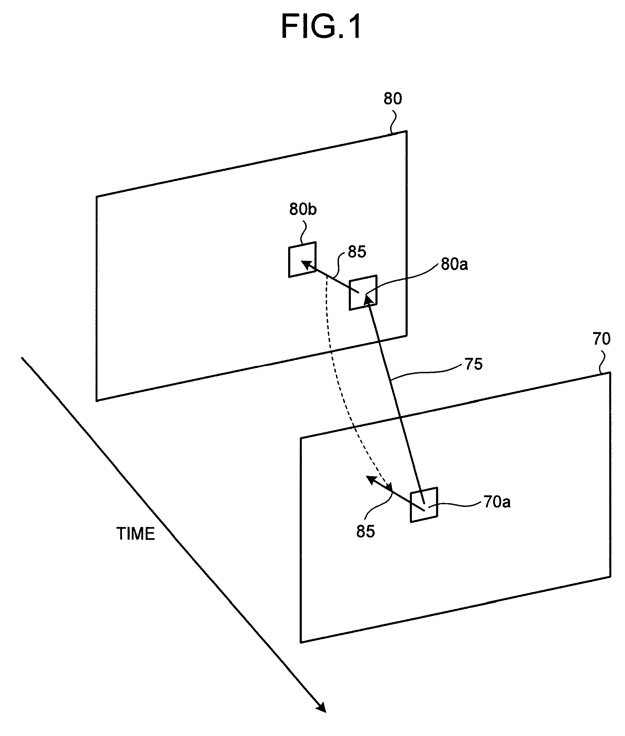

An example of a process performed by an image processing device according to a first embodiment will be described. FIG. 1 is a diagram for describing the example of the process performed by the image processing device according to the first embodiment. In the description of the first embodiment, a block as a coding target will be designated as coding target block, and a frame including the coding target block will be designated as coding target frame. In addition, a frame searched by an inter-screen block prediction unit for an inter-screen predicted block will be designated as reference frame.

The image processing device specifies an intra-screen block prediction vector in the reference frame indicated by an inter-screen block prediction vector determined in the inter-screen block prediction process, as an estimated vector. In the intra-screen block prediction process, the image processing device uses the estimated vector to narrow down the search range for the predicted block, thereby suppressing an increase in the load of the coding process. Such the process performed by the image processing device is based on the assumption that the relative positions of graphics in temporally close frames does not greatly change even when the image is moving.

The process performed by the image processing device will be described with reference to FIG. 1. The image processing device executes the inter-screen block prediction process to specify a reference block 80a corresponding to a coding target block 70a in a coding target frame 70. The vector from the coding target block 70a to the reference block 80a is set as inter-screen block prediction vector 75.

The image processing device refers to the result of the previous intra-screen block prediction process executed on the reference frame 80 to specify a reference block 80b as the result of the intra-screen block prediction on the reference block 80a. The vector from the reference block 80a to the reference block 80b is set as estimated vector 85.

When the image complexity of the coding target block 70a is equal to or larger than a predetermined threshold and the sum of absolute differences of predicted errors of the inter-screen block prediction vector 75 is smaller than a predetermined threshold, the image processing device uses the estimated vector 85 to execute the intra-screen block prediction process on the coding target block 70a. Instead of the sum of absolute differences, the sum of squared differences may be used. For example, the image processing device sets the position of the estimated vector 85 with a starting point at the position of the coding target block 70a as the position for starting search, and executes the intra-screen block prediction process on the region including the coded region with reference to the starting point. The sum of absolute differences SAD of predicted errors is defined by equation (4). The sum of squared differences SSE of predicted errors is defined by equation (5).

$$SAD = \Sigma |PxlA_i - PxlB_i| \qquad\qquad (4)$$

$$SSE = \Sigma |PxlA_i - PxlB_i|^2 \qquad\qquad (5)$$

where PxlAi indicates the pixel values of pixels belonging to the coding target block, and PxlBi the pixel values of pixels belonging to the reference block.

The image processing device sets the position of the estimated vector 85 with a starting point at the position of the coding target block 70a, as the position for starting search as described above, thereby to conduct search within the limited search range and suppress an increase in the processing load of the intra-screen block prediction.

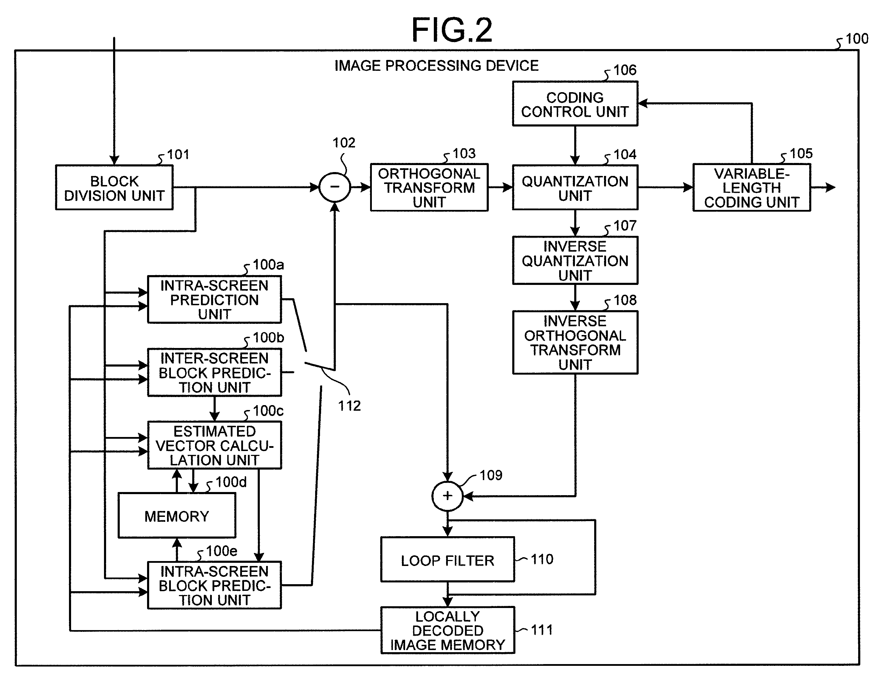

FIG. 2 is a diagram illustrating a configuration of the image processing device according to the first embodiment. As illustrated in FIG. 2, an image processing device 100 includes an intra-screen prediction unit 100a, an inter-screen block prediction unit 100b, an estimated vector calculation unit 100c, a memory 100d, and an intra-screen block prediction unit 100e. The image processing device 100 has a block division unit 101, a subtractor 102, an orthogonal transform unit 103, a quantization unit 104, a variable-length coding unit 105, and a coding control unit 106. The image processing device 100 has an inverse quantization unit 107, an inverse orthogonal transform unit 108, an adder 109, a loop filter 110, a locally decoded image memory 111, and a switch 112.

For example, the intra-screen block prediction unit 100e corresponds to a first specification unit and a search unit. The estimated vector calculation unit 100c corresponds to a second specification unit.

The intra-screen prediction unit 100a is a processing unit that calculates a predicted block from peripheral pixels of the coding target block. The process of calculating the predicted block by the intra-screen prediction unit 100a will be appropriately designated as "intra-screen prediction process". When the switch 112 is connected to the intra-screen prediction unit 100a, the intra-screen prediction unit 100a outputs the calculated predicted block to the subtractor 102.

For example, as described above with reference to FIG. 14, the intra-screen prediction unit 100a calculates the predicted block from the peripheral pixels 72a and 72b of the coding target block 70a in the coding target frame 70. For example, the intra-screen prediction unit 100a calculates the average between the pixel values of the peripheral pixels 72a and 72b as the predicted block for the coding target frame 70. Alternatively, the intra-screen prediction unit 100a may calculate the predicted block in another prediction mode based on a conventional technique.

The intra-screen prediction unit 100a acquires the information on the peripheral pixels 72a and 72b from a block decoded image stored in the locally decoded image memory 111 described later. The intra-screen prediction unit 100a outputs the prediction mode and the predicted block. For example, the predicted error in the intra-screen prediction process is the difference between the coding target block 70a and the predicted block determined from the peripheral pixels 72a and 72b.

The inter-screen block prediction unit 100b is a processing unit that specifies from the reference frame a block with a smaller error as compared to the coding target block and specifies the specified block as a predicted block. The process of specifying the predicted block by the inter-screen block prediction unit 100b will be appropriately designated as "inter-screen block prediction process". When the switch 112 is connected to the inter-screen block prediction unit 100b, the inter-screen block prediction unit 100b outputs the calculated predicted block to the subtractor 102. The inter-screen block prediction unit 100b also outputs the inter-screen block prediction vector to the estimated vector calculation unit 100c.

For example, as described above with reference to FIG. 14, the inter-screen block prediction unit 100b specifies from the reference frame 80 a block with a smaller error as compared to the coding target block 70a and specifies the specified block as a predicted block. For example, when the block with a smaller error as compared to the coding target block 70a is the block 80a, the predicted block is the block 80a. The vector from the coding target block 70a to the predicted block 80a is the inter-screen block prediction vector.

The inter-screen block prediction unit 100b acquires the information on the reference frame from a locally decoded image stored in the locally decoded image memory 111 described later. The inter-screen block prediction unit 100b outputs the predicted block and the prediction vector. For example, the predicted error in the inter-screen block prediction process is the difference between the predicted block 80a and the coding target block 70a.

The estimated vector calculation unit 100c is a processing unit that, when determining that predetermined conditions 1A, 2A, and 3A are satisfied, calculates the estimated vector and outputs the calculated estimated vector to the intra-screen block prediction unit 100e. For example, the predetermined conditions 1A, 2A, and 3A are as described below.

Condition 1A: The image complexity of the coding target block is equal to or larger than a predetermined threshold T1.

Condition 2A: The sum of absolute differences of predicted errors between the coding target block in the coding target frame and the block in the reference frame indicated by the inter-screen block prediction vector is smaller than a threshold T2.

Condition 3A: The sum of absolute differences of predicted errors in the intra-screen prediction performed on the block in the reference frame indicated by the inter-screen block prediction vector is smaller than a threshold T3.

Instead of the foregoing sums of differential absolute values, the sums of differential squares may be used.

The estimated vector calculation unit 100c uses pixel dispersion or the sum of absolute pixel differences as the index for image complexity. The estimated vector calculation unit 100c calculates the pixel dispersion by equation (1). In equation (1), $pxl_i$ denotes the pixel value of an original image block.

$$Var = (pxl_i - AvePxl)^2 \qquad (1)$$

The estimated vector calculation unit 100c calculates the sum of absolute pixel differences by equation (2). The term AvePxl in equation (2) is defined by equation (3).

$$Act = \sum |pxl_i - AvePxl| \qquad (2)$$

$$AvePxl = \frac{\sum pxl_i}{N} \qquad (3)$$

When determining that the conditions 1A to 3A are all satisfied, the estimated vector calculation unit 100c acquires from the memory 100d the intra-screen block prediction vector in the block corresponding to the inter-screen block prediction vector, and sets the acquired vector as the estimated vector. For example, referring to FIG. 1, the estimated vector calculation unit 100c sets the intra-screen block prediction vector 85 in the block 80a corresponding to the inter-screen block prediction vector 75 as the estimated vector. The estimated vector calculation unit 100c outputs the estimated vector to the intra-screen block prediction unit 100e.

The memory 100d is a memory that stores for each frames the block and the intra-screen block prediction vector corresponding to the block in association with each other. The intra-screen block prediction vector corresponding to the block is output from the intra-screen block prediction unit 100e described later.

When acquiring the estimated vector, the intra-screen block prediction unit 100e sets the position indicated by the estimated vector with a starting point at the position of the coding target block as a starting position. From the starting position, the intra-screen block prediction unit 100e specifies in the coded region the optimal block with a small difference from the coding target block as the predicted block.

In contrast, when acquiring no estimated vector, the intra-screen block prediction unit 100e specifies the optimal block as the predicted block from the coded region in the coding target frame.

The process of specifying the predicted block by the intra-screen block prediction unit 100e will be appropriately designated as "intra-screen block prediction process". When the switch 112 is connected to the intra-screen block prediction unit 100e, the intra-screen block prediction unit 100e outputs the calculated predicted block to the subtractor 102. The intra-screen block prediction unit 100e also stores in the memory 100d the information for identifying the coding target frame, the position of the block, and the intra-screen block prediction vector corresponding to the block in association with one another.

For example, as described above with reference to FIG. 14, the intra-screen block prediction unit 100e specifies the optimal block as the predicted block from the coding target frame 70. The optimal block corresponds to the block with the smallest error as compared to the coding target block 70a, for example. In the example of FIG. 14, the intra-screen block prediction unit 100e specifies the block 71a as the predicted block.

The intra-screen block prediction unit 100e outputs the prediction vector and the predicted block. For example, the prediction vector in the intra-screen block prediction process is the difference between the position of the predicted block 71a and the position of the coding target block 70a.

Returning to FIG. 2, the block division unit 101 is a processing unit that, upon receipt of an original image frame, divides the original image frame into rectangular blocks as coding units to generate original image blocks. The block division unit 101 outputs the original image blocks to the intra-screen prediction unit 100a, the inter-screen block prediction unit 100b, the estimated vector calculation unit 100c, the intra-screen block prediction unit 100e, and the subtractor 102.

The subtractor 102 is a processing unit that, when acquiring the original image block and the predicted block, subtracts the predicted block from the original image block to generate a predicted error block. The predicted error block is a block in which spatial and temporal redundancy are removed from the original image block. The subtractor 102 outputs the predicted error block to the orthogonal transform unit 103.

The orthogonal transform unit 103 is a processing unit that performs frequency transform on the predicted error block to reduce redundancy, taking advantage of high spatial correlation, thereby to transform the predicted error block into a transform factor. The orthogonal transform unit 103 outputs the transform coefficients to the quantization unit 104.

The quantization unit 104 is a processing unit that quantizes the transform coefficients to generate a quantized transform coefficients . The quantization unit 104 outputs the quantized transform coefficients to the variable-length coding unit 105 and the inverse quantization unit 107. The quantization unit 104 controls the fineness of values in quantization based on the quantization value output from the coding control unit 106.

The variable-length coding unit 105 is a processing unit that performs variable-length coding on the quantized transform coefficients to generate a coded stream. The variable-length coding unit 105 outputs the coded stream to an external device such as a decoder. The variable-length coding unit 105 also outputs to the coding control unit 106 information on a bandwidth assigned for output of the coded stream as amount of generated information .

The coding control unit 106 calculates the quantization value from the amount of generated information and outputs the calculated quantization values to the quantization unit 104.

The inverse quantization unit 107 is a processing unit that performs inverse quantization to transform the quantized transform coefficients to an inversely quantized transform coefficients . The inversely quantized transform coefficients constitutes information corresponding to the transform coefficients output from the orthogonal transform unit 103. The inverse quantization unit 107 outputs the inversely quantized transform coefficients to the inverse orthogonal transform unit 108.

The inverse orthogonal transform unit 108 is a processing unit that performs inverse frequency transform to transform the inversely quantized transform coefficients to a predicted error decoded block. The predicted error decoded block constitutes information corresponding to the predicted error block output from the subtractor 102. The inverse orthogonal transform unit 108 outputs the predicted error decoded block to the adder 109.

The adder 109 is a processing unit that adds up the predicted block and the predicted error decoded block. The adder 109 outputs the generated block to the loop filter 110 and the locally decoded image memory 111.

The loop filter 110 is a processing unit that receives the block from the adder 109 and applies a de-blocking filter for smoothing out asperities between joined blocks to generate a locally decoded image. The loop filter 110 outputs the locally decoded image to the locally decoded image memory 111.

The locally decoded image memory 111 is a storage unit that stores the block decoded images from the adder 109 and the locally decoded images from the loop filter 110. The locally decoded images stored in the locally decoded image memory 111 are referred to by the intra-screen prediction unit 100a, the inter-screen block prediction unit 100b, the estimated vector calculation unit 100c, and the intra-screen block prediction unit 100e. For example, the locally decoded images constitute local images out of images decoded by the decoder receiving the coded stream.

The image processing device 100 calculates coding costs for the intra-screen prediction process, the inter-screen block prediction process, and the intra-screen block prediction process, and determines the process with the lowest coding cost, and then controls the switch 112 based on the determination result. For example, the image processing device 100 calculates the coding costs by summing with weighting the predicted error and the coded data amount.

When the coding cost for the intra-screen prediction process is the lowest, the image processing device 100 connects the intra-screen prediction unit 100a and the switch 112. When the coding cost for the inter-screen block prediction process is the lowest, the image processing device 100 connects the inter-screen block prediction unit 100b and the switch 112. When the coding cost for the intra-screen block prediction process is the lowest, the image processing device 100 connects the intra-screen block prediction unit 100e and the switch 112.

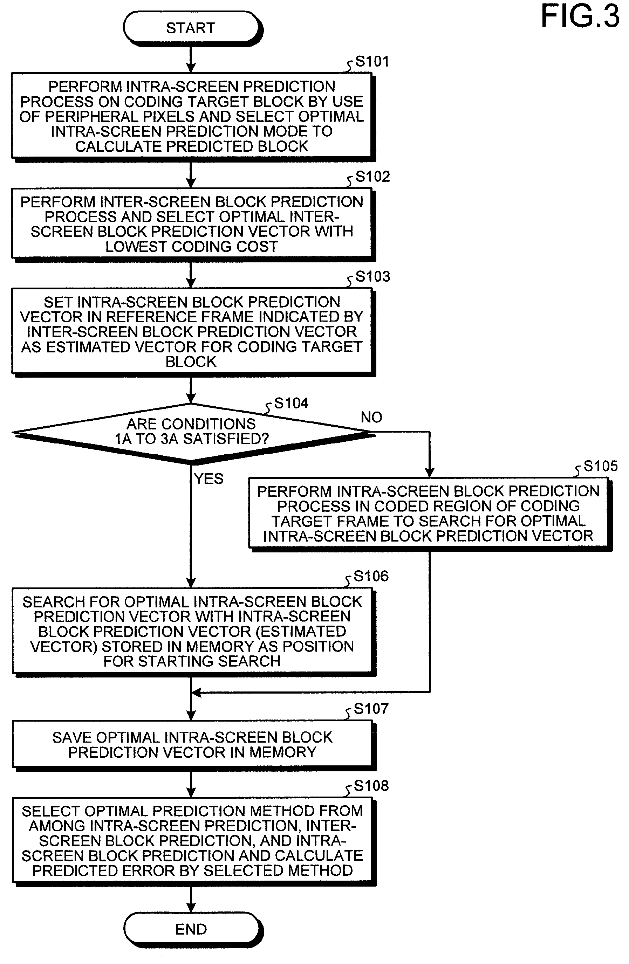

Next, a procedure for a process performed by the image processing device 100 according to the first embodiment will be described. FIG. 3 is a flowchart of the process performed by the image processing device according to the first embodiment. As illustrated in FIG. 3, the intra-screen prediction unit 100a of the image processing device 100 performs the intra-screen prediction process on the coding target block by use of peripheral pixels. The intra-screen prediction unit 100a selects the optimal intra-screen prediction mode and calculates the predicted block in that mode (step S101).

The inter-screen block prediction unit 100b of the image processing device 100 performs the inter-screen block prediction process, and selects the optimal inter-screen block prediction vector with the lowest coding cost (step S102).

The estimated vector calculation unit 100c of the image processing device 100 sets the intra-screen block prediction vector in the reference frame indicated by the inter-screen block prediction vector as the estimated vector of the coding target block (step S103).

The estimated vector calculation unit 100c determines whether the conditions 1A to 3A are satisfied (step S104). When the conditions 1A to 3A are not satisfied (step S104, No) the estimated vector calculation unit 100c moves to step S105.

The intra-screen block prediction unit 100e of the image processing device 100 performs the intra-screen block prediction process in the coded region of the coding target frame to search for the optimal intra-screen block prediction vector (step S105), and moves to step S107.

In contrast, the conditions 1A to 3A are satisfied (step S104, Yes), the estimated vector calculation unit 100c moves to step S106. The intra-screen block prediction unit 100e searches for the optimal intra-screen block prediction vector from the intra-screen block prediction vector (estimated vector) stored in the memory 100d as the position for starting search (step S106).

The intra-screen block prediction unit 100e saves the optimal intra-screen block prediction vector in the memory 100d (step S107). The image processing device 100 selects the optimal prediction method from among the intra-screen prediction, the inter-screen block prediction, and the intra-screen block prediction, and calculates the predicted error by that method (step S108).

Next, the advantage of the image processing device 100 according to the first embodiment will be described. The image processing device 100 uses the results of the inter-screen block prediction process and the intra-screen block prediction process on the front frame to determine the estimated vector for the intra-screen block prediction in the coding target block. Then, the image processing device 100 executes the intra-screen block prediction process, setting the position of the estimated vector with a starting point at the position of the coding target block as the position for starting search. Accordingly, it is possible to conduct search within the limited search range in the intra-screen block prediction process and suppress an increase in the processing load of the intra-screen block prediction.

For example, screen content tends to include a plurality of patterns of the same shapes such as fonts and textures in each frame. This increases the importance of the intra-screen block prediction process corresponding to IBC. Accordingly, suppressing the processing load of the intra-screen block prediction by use of the estimated vector would lead to suppressing the entire processing load of the image processing device 100 which handles the screen content.

[b] Second Embodiment

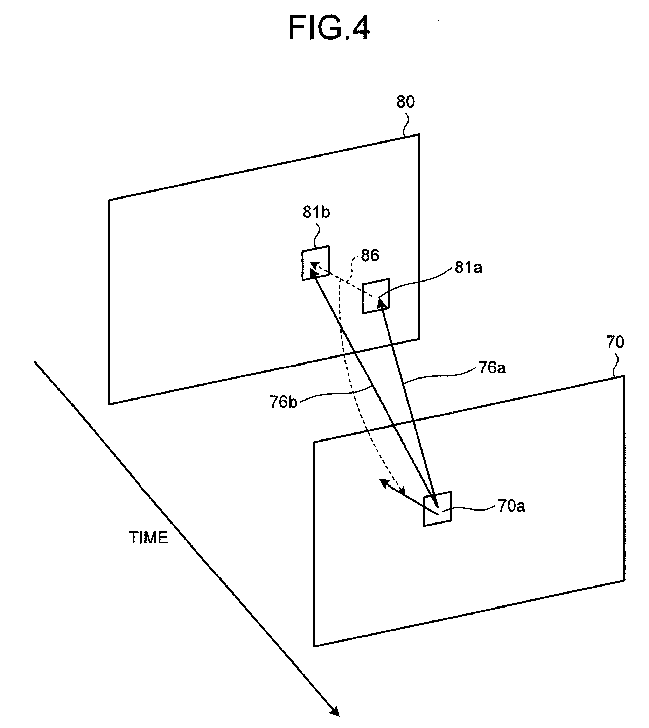

An example of a process performed by an image processing device according to a second embodiment will be described. FIG. 4 is a diagram for describing the example of the process performed by the image processing device according to the second embodiment. The image processing device calculates the estimated vector from a plurality of inter-screen block prediction vectors. At the execution of the intra-screen block prediction process, the image processing device uses the estimated vector to narrow down the search range for the predicted block, thereby suppressing an increase in the load of the coding process.

The process performed by the image processing device will be described with reference to FIG. 4. The image processing device executes the inter-screen block prediction process to specify a first candidate reference block 81a and a second candidate reference block 81b corresponding to the coding target block 70a of the coding target frame 70. For example, the first candidate reference block 81a is the block with the smallest sum of absolute differences of predicted errors as compared to the coding target block 70a among the blocks of the reference frame 80. The second candidate reference block 81b is the block with the second smallest sum of absolute differences of predicted errors as compared to the coding target block 70a among the blocks of the reference frame 80. Instead of the sum of absolute differences, the sum of squared differences may be used.

The vector from the coding target block 70a to the first candidate reference block 81a will be designated as an inter-screen block prediction vector 76a. The vector from the coding target block 70a to the second candidate reference block 81b will be designated as an inter-screen block prediction vector 76b. The image processing device specifies the difference between the inter-screen block prediction vector 76a and the inter-screen block prediction vector 76b as an estimated vector 86.

When the image complexity of the coding target block 70a is equal to or larger than a predetermined threshold and the sum of absolute differences of predicted errors in the inter-screen block prediction vector 76a and 76b is smaller than a predetermined threshold, the image processing device uses the estimated vector 86 to execute the intra-screen block prediction process on the coding target block 70a. Instead of the sum of absolute differences, the sum of squared differences may be used. For example, the image processing device sets the position of the estimated vector 86 with a starting point at the position of the coding target block 70a as the position for starting search, and executes the intra-screen block prediction process on the region including the coded region with reference to the starting point.

By setting, the position of the estimated vector 86 with the position of the coding target block 70a at the starting point, as the position for starting search as described above, the image processing device can perform the search process within the limited search range and suppress an increase in the processing load of the intra-screen block prediction.

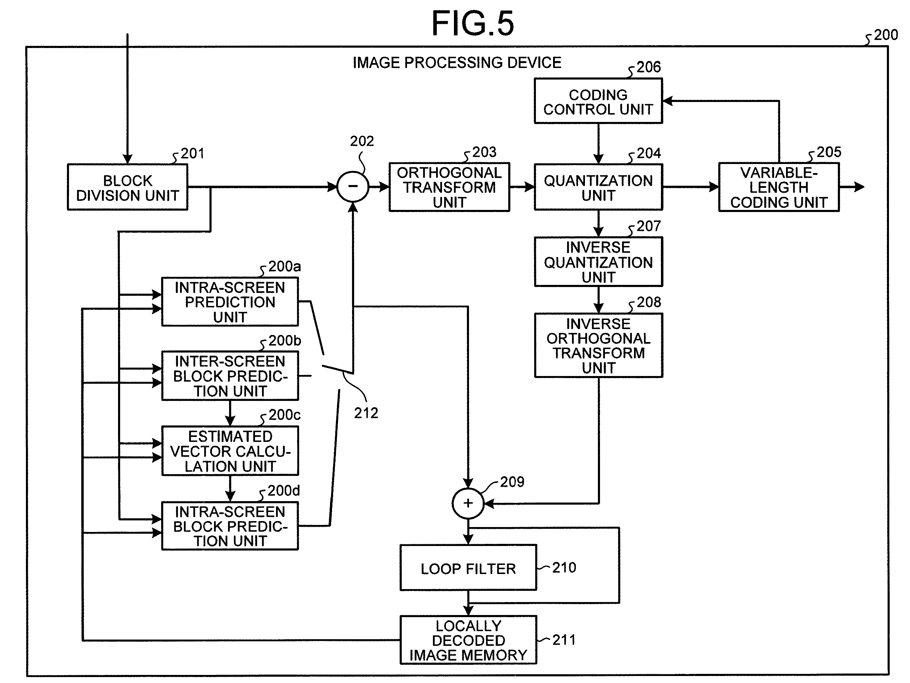

FIG. 5 is a diagram illustrating a configuration of the image processing device according to the second embodiment. As illustrated in FIG. 5, an image processing device 200 has an intra-screen prediction unit 200a, an inter-screen block prediction unit 200b, an estimated vector calculation unit 200c, and an intra-screen block prediction unit 200d. The image processing device 200 has a block division unit 201, a subtractor 202, an orthogonal transform unit 203, a quantization unit 204, a variable-length coding unit 205, and a coding control unit 206. The image processing device 200 has an inverse quantization unit 207, an inverse orthogonal transform unit 208, an adder 209, a loop filter 210, a locally decoded image memory 211, and a switch 212.

For example, the inter-screen block prediction unit 200b corresponds to an acquisition unit. The estimated vector calculation unit 200c corresponds to a calculation unit. The intra-screen block prediction unit 200d corresponds to a search unit.

The intra-screen prediction unit 200a is a processing unit that calculates a predicted block from peripheral pixels of the coding target block. Descriptions of the intra-screen prediction unit 200a are the same as the description of the intra-screen prediction unit 100a. When the switch 212 is connected to the intra-screen prediction unit 200a, the intra-screen prediction unit 200a outputs the calculated predicted block to the subtractor 202.

The inter-screen block prediction unit 200b specifies from the reference frame first and second candidate blocks with smaller errors as compared to the coding target block, and specifies the specified first candidate block as the predicted block. In addition, the inter-screen block prediction unit 200b outputs the inter-screen block prediction vector corresponding to the first candidate block and the inter-screen block prediction vector corresponding to the second candidate block to the estimated vector calculation unit 200c.

In the following description, as appropriate, the inter-screen block prediction vector corresponding to the first candidate will be designated as first prediction vector, and the inter-screen block prediction vector corresponding to the second candidate block will be designated as second prediction vector. For example, the first prediction vector corresponds to the inter-screen block prediction vector 76a illustrated in FIG. 4, and the second prediction vector corresponds to the inter-screen block prediction vector 76b illustrated in FIG. 4.

Other description of the inter-screen block prediction unit 200b is the same as the description of the inter-screen block prediction unit 100b.

The estimated vector calculation unit 200c is a processing unit that, when determining that predetermined conditions 1B and 2B are satisfied, calculates the estimated vector and outputs the calculated estimated vector to the intra-screen block prediction unit 200d. For example, the predetermined conditions 1B and 2B are as described below.

Condition 1B: The image complexity of the coding target block is equal to or larger than a predetermined threshold T1.
Condition 2B: The sum of absolute differences of predicted errors in the first prediction vector and the second prediction vector is smaller than a threshold T4.

Instead of the sum of absolute differences, the sum of squared differences may be used.

As for the condition 1B, the process of calculating the image complexity of the coding target block is the same as the process executed by the estimated vector calculation unit 100c in the first embodiment.

As for the condition 2B, the sum of absolute differences of predicted errors in the first prediction vector is the sum of absolute pixel differences between the coding target block and the reference block indicated by the first prediction vector. The sum of absolute differences of the predicted error in the second prediction vector is the sum of absolute pixel differences between the coding target block and the reference block indicated by the second prediction vector. Instead of the sum of absolute differences, the sum of squared differences may be used.

When determining that the conditions 1B and 2B are all satisfied, the estimated vector calculation unit 200c outputs the estimated vector as the difference between the first prediction vector and the second prediction vector to the intra-screen block prediction unit 200d.

When acquiring the estimated vector, the intra-screen block prediction unit 200d sets the position indicated by the estimated vector with a starting point at the position of the coding target block as a starting position. From the starting position, the intra-screen block prediction unit 200d specifies in the coded region the optimal block with a small difference from the coding target block as the predicted block.

In contrast, when acquiring no estimated vector, the intra-screen block prediction unit 200d specifies the optimal block as the predicted block from the coded region in the coding target frame. When the switch 212 is connected to the intra-screen block prediction unit 200d, the intra-screen block prediction unit 200d outputs the calculated predicted block to the subtractor 202. Other descriptions of the intra-screen block prediction unit 200d are the same as the descriptions of the intra-screen block prediction unit 100e.

Returning to FIG. 5, descriptions of the processing units 201 to 212 illustrated in FIG. 5 are the same as the descriptions of the processing units 101 to 112 illustrated in FIG. 2 and thus will be omitted.

The image processing device 200 calculates coding costs for the intra-screen prediction process, the inter-screen block prediction process, and the intra-screen block prediction process, and determines the process with the lowest coding cost, and then controls the switch 212 based on the determination result. For example, the image processing device 200 calculates the coding costs by summing with weighting the predicted error and the coded data amount.

When the coding cost for the intra-screen prediction process is the lowest, the image processing device 200 connects the intra-screen prediction unit 200a and the switch 212. When the coding cost for the inter-screen block prediction process is the lowest, the image processing device 200 connects the inter-screen block prediction unit 200b and the switch 212. When the coding cost for the intra-screen block prediction process is the lowest, the image processing device 200 connects the intra-screen block prediction unit 200d and the switch 212.

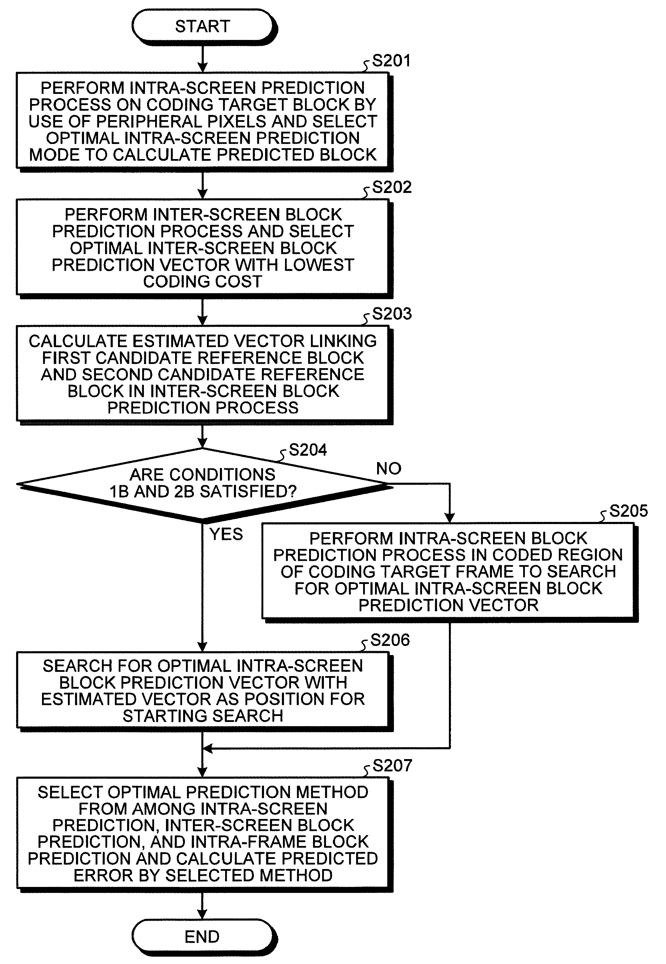

Next, a procedure for a process performed by the image processing device 200 according to the second embodiment will be described. FIG. 6 is a flowchart of the process performed by the image processing device according to the second embodiment. As illustrated in FIG. 6, the intra-screen prediction unit 200a of the image processing device 200 performs the intra-screen prediction process on the coding target block by use of the peripheral pixels. The intra-screen prediction unit 200a selects the optimal intra-screen prediction mode and calculates the predicted block in that mode (step S201).

The inter-screen block prediction unit 200b of the image processing device 200 performs the inter-screen block prediction process and selects the optimal inter-screen block prediction vector with the lowest coding cost (step S202).

The estimated vector calculation unit 200c of the image processing device 200 calculates an estimated vector linking a first candidate reference block and a second candidate reference block in the inter-screen block prediction process (step S203).

The estimated vector calculation unit 200c determines whether the conditions 1B and 2B are satisfied (step S204). When determining that the conditions 1B and 2B are not satisfied (step S204, No), the estimated vector calculation unit 200c moves to step S205.

The intra-screen block prediction unit 200d of the image processing device 200 performs the intra-screen block prediction process in the coded region of the coding target frame, searches for the optimal intra-screen prediction vector (step S205), and moves to step S207.

Meanwhile, when determining that the conditions 1B and 2B are satisfied (step S204, Yes), the estimated vector calculation unit 200c moves to step S206. The intra-screen block prediction unit 200d searches for the optimal intra-screen prediction vector with the estimated vector as the position for starting search (step S206).

The image processing device 200 selects the optimal prediction method from among the intra-screen prediction, the inter-screen block prediction, and the intra-screen block prediction, and calculates the predicted error by that method (step S207).

Next, the advantage of the image processing device according to the second embodiment will be described. The image processing device 200 uses the results of the inter-screen block prediction process to determine the estimated vector from the difference between the first prediction vector and the second prediction vector. Then, the image processing device 200 executes the intra-screen block prediction process, setting the position of the estimated vector with a starting point at the position of the coding target block, as the position for starting search. Accordingly, it is possible to conduct search within the limited search range in the intra-screen block prediction process and suppress an increase in the processing load of the intra-screen block prediction.

[c] Third Embodiment

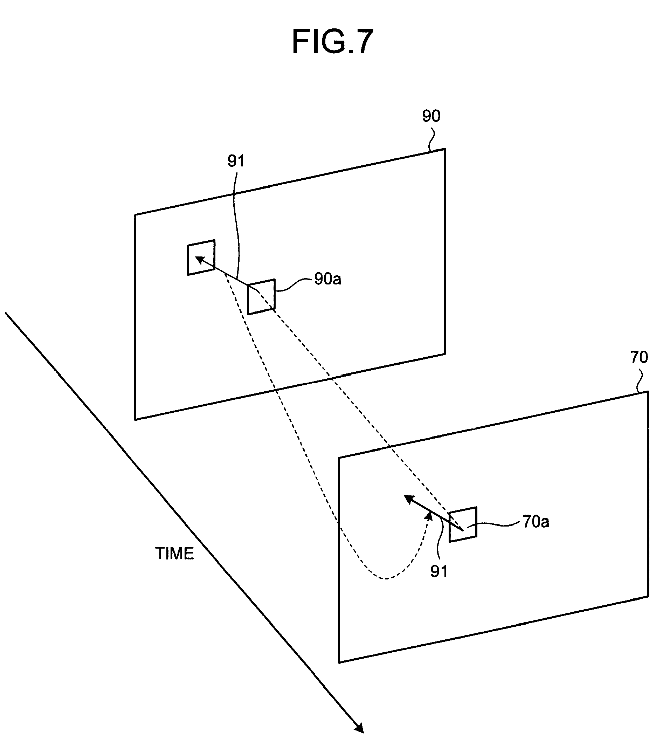

An example of a process performed by an image processing device according to a third embodiment will be described. FIG. 7 is a diagram for describing the example of the process performed by the image processing device according to the third embodiment. The image processing device calculates the intra-screen block prediction vector of the block in other frames at the same position as the position of the coding target block, as the estimated vector. At the execution of the intra-screen block prediction process for the coding target block, the image processing device uses the estimated vector to narrow down the search range for the predicted block, thereby suppressing an increase in the load of the coding process.

The process performed by the image processing device will be described with reference to FIG. 7. In the following description with reference to FIG. 7, the coding target frame is set as coding target frame 70, and another frame as frame 90. The other frame 90 is a frame not to be subjected to inter-screen block prediction. The image processing device specifies a block 90a in the other frame 90 at the same position as the position of the coding target block 70a, based on the assumption that the coding target block 70a is not moved. The image processing device acquires an intra-screen block prediction vector 91 for the block 90a specified in the previous process, and sets the intra-screen block prediction vector 91 as the estimated vector.

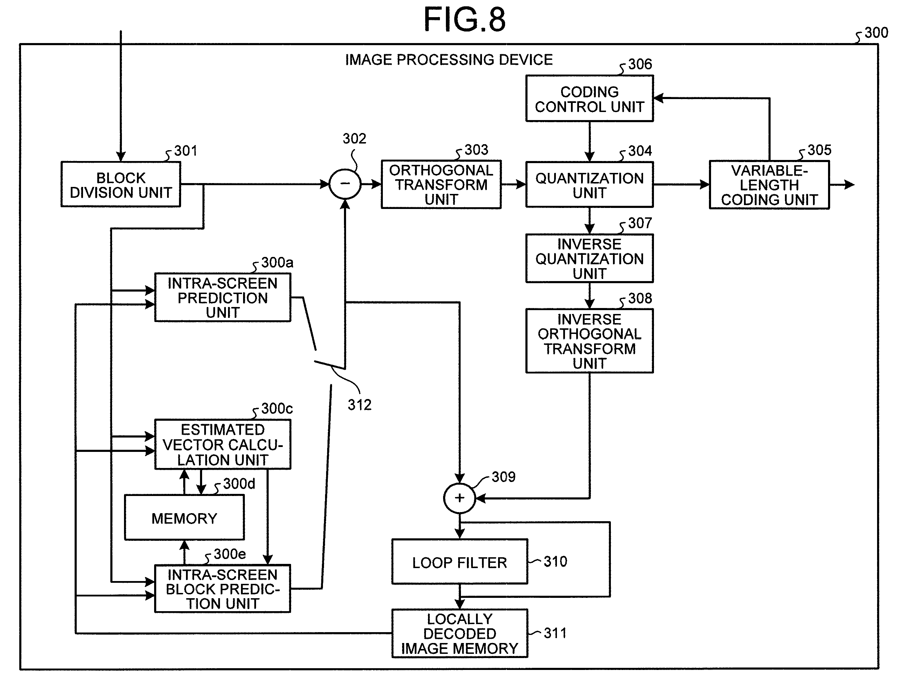

FIG. 8 is a diagram illustrating a configuration of the image processing device according to the third embodiment. As illustrated in FIG. 8, an image processing device 300 has an intra-screen prediction unit 300a, an estimated vector calculation unit 300c, a memory 300d, and an intra-screen block prediction unit 300e. The image processing device 300 has a block division unit 301, a subtractor 302, an orthogonal transform unit 303, a quantization unit 304, a variable-length coding unit 305, and a coding control unit 306. The image processing device 300 has an inverse quantization unit 307, an inverse orthogonal transform unit 308, an adder 309, a loop filter 310, a locally decoded image memory 311, and a switch 312.

For example, the intra-screen block prediction unit 300e corresponds to a first specification unit and a search unit. The estimated vector calculation unit 300c corresponds to a second specification unit.

The intra-screen prediction unit 300a is a processing unit that calculates a predicted block from peripheral pixels of the coding target block. Descriptions of the intra-screen prediction unit 300a are the same as the descriptions of the intra-screen prediction unit 100a. When the switch 312 is connected to the intra-screen prediction unit 300a, the intra-screen prediction unit 300a outputs the calculated predicted block to the subtractor 302.

The estimated vector calculation unit 300c is a processing unit that, when determining that predetermined conditions 1C and 2C are satisfied, calculates an estimated vector and outputs the calculated estimated vector to the intra-screen block prediction unit 300e. For example, the predetermined conditions 1C and 2C are as described below.

Condition 1C: The image complexity of the coding target block is equal to or larger than a predetermined threshold T1.

Condition 2C: The sum of absolute differences of pixels between the coding target block and the block in another frame at the same position as the position of the coding target block is smaller than a threshold T6.

As for the condition 1C, the process of calculating the image complexity of the coding target block is the same as the process executed by the estimated vector calculation unit 100c in the first embodiment.

As for the condition 2C, when the coding target block is the block 70a illustrated in FIG. 7, the block in another frame at the same position as the position of the coding target block is the block 90a. For example, the condition 2C is satisfied when the sum of absolute differences between the coding target block 70a and the block 90a is smaller than a threshold T6. Instead of the sum of absolute differences, the sum of squared differences may be used.

When determining that the conditions 1C and 2C are all satisfied, the estimated vector calculation unit 300c acquires from the memory 300d the intra-screen block prediction vector for the applicable block and sets the acquired vector as the estimated vector. For example, referring to FIG. 7, the estimated vector calculation unit 300c sets the intra-screen block prediction vector 91 for the block 90a as the estimated vector. The estimated vector calculation unit 300c outputs the estimated vector to the intra-screen block prediction unit 300e.

The memory 300d is a memory that stores for each frames the block and the intra-screen block prediction vector corresponding to the block in association with each other. The intra-screen block prediction vector corresponding to the block is output from the intra-screen block prediction unit 300e described later.

When acquiring the estimated vector, the intra-screen block prediction unit 300e sets the position refered to i by the estimated vector from the position of the coding target block, as a starting position. From the starting position, the intra-screen block prediction unit 300e specifies in the coded region the optimal block with a small difference from the coding target block as the predicted block.

In contrast, when acquiring no estimated vector, the intra-screen block prediction unit 300e specifies the optimal block as the predicted block from the coded region in the coding target frame.

When the switch 312 is connected to the intra-screen block prediction unit 300e the intra-screen block prediction unit 300e outputs the calculated predicted block to the subtractor 302. The intra-screen block prediction unit 300e also stores in the memory 300d the information for identifying the coding target frame, the position of the block, and the intra-screen block prediction vector corresponding to the block in association with one another. Other description of the intra-screen block prediction unit 300e is the same as the description of the intra-screen block prediction unit 100e.

Returning to FIG. 8, descriptions of the processing units 301 to 312 illustrated in FIG. 8 are the same as the descriptions of the processing units 101 to 112 illustrated in FIG. 2 and thus will be omitted.

The image processing device 300 calculates coding costs for the intra-screen prediction process, the inter-screen block prediction process, and the intra-screen block prediction process, and determines the process with the lowest coding cost, and then controls the switch 312 based on the determination result. For example, the image processing device 300 calculates the coding costs by summing with weighting the predicted error and the coded data amount.

When the coding cost for the intra-screen prediction process is the lowest, the image processing device 300 connects the intra-screen prediction unit 300a and the switch 312. When the coding cost for the inter-screen block prediction process is the lowest, the image processing device 300 connects an inter-screen block prediction unit 300b and the switch 312. When the coding cost for the intra-screen block prediction process is the lowest, the image processing device 300 connects the intra-screen block prediction unit 300e and the switch 312.

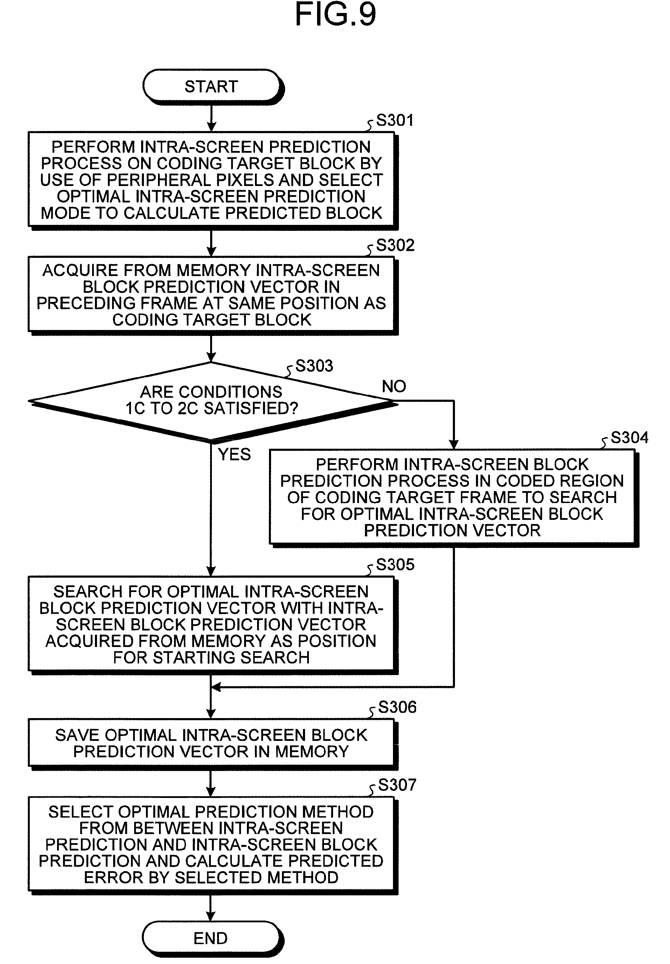

Next, a procedure for a process performed by the image processing device 300 according to the third embodiment will be described. FIG. 9 is a flowchart of the process performed by the image processing device according to the third embodiment. As illustrated in FIG. 9, the intra-screen prediction unit 300a of the image processing device 300 performs the intra-screen prediction process on the coding target block by use of the peripheral pixels. The intra-screen prediction unit 300a selects the optimal intra-screen prediction mode and calculates the predicted block in that mode (step S301).

The estimated vector calculation unit 300c of the image processing device 300 acquires from the memory 300d the intra-screen block prediction vector in the preceding frame at the same position as the position of the coding target block (step S302).

The estimated vector calculation unit 300c determines whether the conditions 1C and 2C are satisfied (step S303). When determining that the conditions 1C and 2C are not satisfied (step S303, No), the estimated vector calculation unit 300c moves to step S304.

The intra-screen block prediction unit 300e of the image processing device 300 performs the intra-screen block prediction process in the coded region of the coding target frame, searches for the optimal intra-screen prediction vector (step S304), and moves to step S306.

Meanwhile, when determining that the conditions 1C and 2C are satisfied (step S303, Yes), the estimated vector calculation unit 300c moves to step S305. The intra-screen block prediction unit 300e searches for the optimal intra-screen block prediction vector with the intra-screen block prediction vector (estimated vector) stored in the memory 300d as the position for starting search (step S305).

The intra-screen block prediction unit 300e saves the optimal intra-screen block prediction vector in the memory 300d (step S306). The image processing device 300 selects the optimal prediction method from between the intra-screen prediction and the intra-screen block prediction, and calculates the predicted error by that method (step S307).

Next, the advantage of the image processing device 300 according to the third embodiment will be described. The image processing device 300 calculates the intra-screen block prediction vector for the block in another frame at the same position as the coding target block, as the estimated vector. Then, the image processing device 300 executes the intra-screen block prediction process, setting the position refered to by the estimated vector from the position of the coding target block, as the position for starting search. Accordingly, it is possible to conduct search within the limited search range in the intra-screen block prediction process and suppress an increase in the processing load of the intra-screen block prediction.

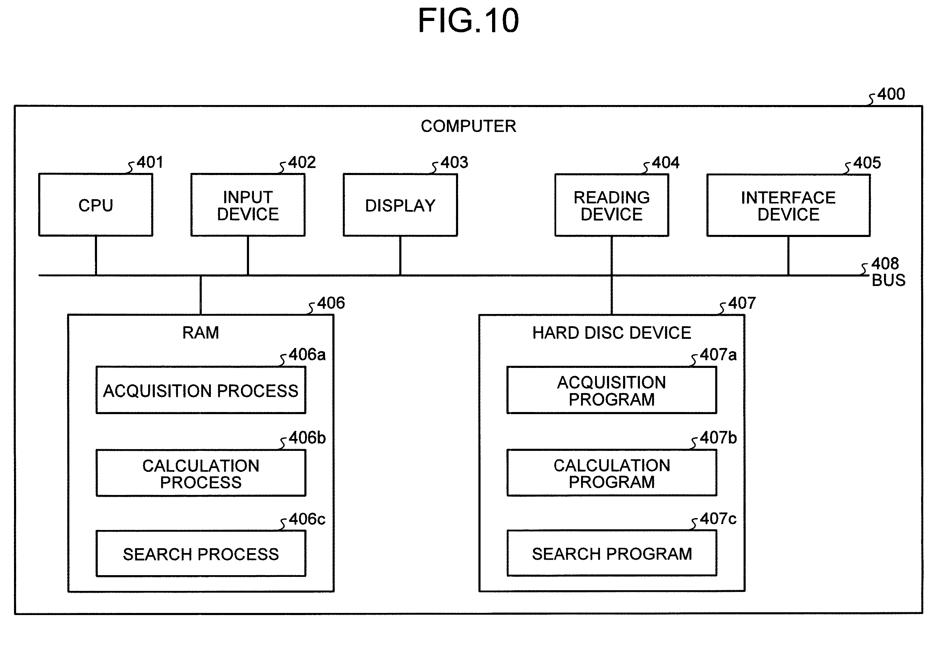

Next, an example of a computer executing a data classification program for implementing the same functions as those of the image processing devices in the foregoing examples will be described. FIG. 10 is a diagram illustrating an example of a computer executing an image processing program.

As illustrated in FIG. 10, a computer 400 has a CPU 401 executing various arithmetic operations, an input device 402 accepting entry of data from the user, and a display 403. The computer 400 also has a reading device 404 reading programs and others from storage media and an interface device 405 exchanging data with other computers via a network. The computer 400 also has RAM 406 temporarily storing various kinds of information and a hard disc device 407. The devices 401 to 407 are connected to a bus 408.

The hard disc device 407 has an acquisition program 407a, a calculation program 407b, and a search program 407c. The CPU 401 reads the acquisition program 407a, the calculation program 407b, and the search program 407c, and expands the same in the RAM 406.

The acquisition program 407a serves as an acquisition process 406a. The calculation program 407b serves as a calculation process 406b. The search program 407c serves as a search process 406c. The acquisition process 406a corresponds to the inter-screen block prediction unit 200b. The calculation process 406b corresponds to the estimated vector calculation unit 200c. The search process 406c corresponds to the intra-screen block prediction unit 200d.

The acquisition program 407a, the calculation program 407b, and the search program 407c is not necessarily stored in the hard disc device 407 from the beginning. For example, the programs may be stored in "portable physical media" such as a flexible disc (FD), a CD-ROM, a DVD disc, an optical magnetic disc, and an IC card inserted into the computer 400, for example. Then, the computer 400 may read and execute the programs 407a to 407c.

According to one embodiment of the present invention, it is possible to suppress an increase in the load of the coding process.

**Claims**

1.  An image processing device, comprising:

    an acquisition unit(200b) that compares blocks included in a first frame and a coding target block included in a second frame to calculate predicted errors, and acquires the position of a first candidate predicted block included in the first frame and the position of a second candidate predicted block based on the predicted errors;
    a calculation unit(200c) that calculates a vector linking the position of the first candidate predicted block and the position of the second candidate predicted block; and
    a search unit(200d) that searches for a predicted block corresponding to the coding target block from the position of the vector with a starting point at the position of the coding target block as the position for starting search.

2.  The image processing device according to claim 1, wherein the search unit(200d) sets the position for starting the search in a coded region on the second frame.

3.  The image processing device according to claim 1, wherein the search unit(200d) searches for the predicted block corresponding to the coding target block from the position of the vector with a starting point at the position of the coding target block as the position for starting search, when an image of the coding target block in the second frame is complicated and the predicted error between the first candidate predicted block and the coding target block and the predicted error between the second candidate predicted block and the coding target block are small.

4. An image processing method executed by a computer, the image processing method comprising:

comparing blocks included in a first frame and a coding target block included in a second frame to calculate predicted errors;
acquiring the position of a first candidate predicted block included in the first frame and the position of a second candidate predicted block based on the predicted errors;
calculating a vector linking the position of the first candidate predicted block and the position of the second candidate predicted block; and
searching for a predicted block corresponding to the coding target block from the position of the vector with a starting point at the position of the coding target block as the position for starting search.

5. The image processing method according to claim 4, wherein the image processing method further comprises setting the position for starting the search in a coded region on the second frame.

6. The image processing method according to claim 4, wherein the searching searches for the predicted block corresponding to the coding target block from the position of the vector with a starting point at the position of the coding target block as the position for starting search, when an image of the coding target block in the second frame is complicated and the predicted error between the first candidate predicted block and the coding target block and the predicted error between the second candidate predicted block and the coding target block are small.

7. An image processing program that causes a computer to execute a process comprising:

comparing blocks included in a first frame and a coding target block included in a second frame to calculate predicted errors;
acquiring the position of a first candidate predicted block included in the first frame and the position of a second candidate predicted block based on the predicted errors;
calculating a vector linking the position of the first candidate predicted block and the position of the second candidate predicted block; and
searching for a predicted block corresponding to the coding target block from the position of the vector with a starting point at the position of the coding target block as the position for starting search.

8. The image processing program according to claim 7, wherein the process further comprises setting the position for starting the search in a coded region on the second frame.

9. The image processing program according to claim 7, wherein the searching searches for the predicted block corresponding to the coding target block from the position of the vector with a starting point at the position of the coding target block as the position for starting search, when an image of the coding target block in the second frame is complicated and the predicted error between the first candidate predicted block and the coding target block and the predicted error between the second candidate predicted block and the coding target block are small.

# FIG.1

# FIG.2

FIG.3

START

S101
PERFORM INTRA-SCREEN PREDICTION PROCESS ON CODING TARGET BLOCK BY USE OF PERIPHERAL PIXELS AND SELECT OPTIMAL INTRA-SCREEN PREDICTION MODE TO CALCULATE PREDICTED BLOCK

S102
PERFORM INTER-SCREEN BLOCK PREDICTION PROCESS AND SELECT OPTIMAL INTER-SCREEN BLOCK PREDICTION VECTOR WITH LOWEST CODING COST

S103
SET INTRA-SCREEN BLOCK PREDICTION VECTOR IN REFERENCE FRAME INDICATED BY INTER-SCREEN BLOCK PREDICTION VECTOR AS ESTIMATED VECTOR FOR CODING TARGET BLOCK

S104
ARE CONDITIONS 1A TO 3A SATISFIED?

NO

YES

S105
PERFORM INTRA-SCREEN BLOCK PREDICTION PROCESS IN CODED REGION OF CODING TARGET FRAME TO SEARCH FOR OPTIMAL INTRA-SCREEN BLOCK PREDICTION VECTOR

S106
SEARCH FOR OPTIMAL INTRA-SCREEN BLOCK PREDICTION VECTOR WITH INTRA-SCREEN BLOCK PREDICTION VECTOR (ESTIMATED VECTOR) STORED IN MEMORY AS POSITION FOR STARTING SEARCH

S107
SAVE OPTIMAL INTRA-SCREEN BLOCK PREDICTION VECTOR IN MEMORY

S108
SELECT OPTIMAL PREDICTION METHOD FROM AMONG INTRA-SCREEN PREDICTION, INTER-SCREEN BLOCK PREDICTION, AND INTRA-SCREEN BLOCK PREDICTION AND CALCULATE PREDICTED ERROR BY SELECTED METHOD

END

# FIG.4

FIG.5

START

**S201**

PERFORM INTRA-SCREEN PREDICTION PROCESS ON CODING TARGET BLOCK BY USE OF PERIPHERAL PIXELS AND SELECT OPTIMAL INTRA-SCREEN PREDICTION MODE TO CALCULATE PREDICTED BLOCK

**S202**

PERFORM INTER-SCREEN BLOCK PREDICTION PROCESS AND SELECT OPTIMAL INTER-SCREEN BLOCK PREDICTION VECTOR WITH LOWEST CODING COST

**S203**

CALCULATE ESTIMATED VECTOR LINKING FIRST CANDIDATE REFERENCE BLOCK AND SECOND CANDIDATE REFERENCE BLOCK IN INTER-SCREEN BLOCK PREDICTION PROCESS

**S204**

ARE CONDITIONS 1B AND 2B SATISFIED? — NO

YES

**S205**

PERFORM INTRA-SCREEN BLOCK PREDICTION PROCESS IN CODED REGION OF CODING TARGET FRAME TO SEARCH FOR OPTIMAL INTRA-SCREEN BLOCK PREDICTION VECTOR

**S206**

SEARCH FOR OPTIMAL INTRA-SCREEN BLOCK PREDICTION VECTOR WITH ESTIMATED VECTOR AS POSITION FOR STARTING SEARCH

**S207**

SELECT OPTIMAL PREDICTION METHOD FROM AMONG INTRA-SCREEN PREDICTION, INTER-SCREEN BLOCK PREDICTION, AND INTRA-FRAME BLOCK PREDICTION AND CALCULATE PREDICTED ERROR BY SELECTED METHOD

END

# FIG.7

TIME

# FIG.8

IMAGE PROCESSING DEVICE 300

BLOCK DIVISION UNIT 301

302

ORTHOGONAL TRANSFORM UNIT 303

CODING CONTROL UNIT 306

QUANTIZATION UNIT 304

VARIABLE-LENGTH CODING UNIT 305

INVERSE QUANTIZATION UNIT 307

INVERSE ORTHOGONAL TRANSFORM UNIT 308

INTRA-SCREEN PREDICTION UNIT 300a

312

ESTIMATED VECTOR CALCULATION UNIT 300c

MEMORY 300d

INTRA-SCREEN BLOCK PREDICTION UNIT 300e

309

LOOP FILTER 310

LOCALLY DECODED IMAGE MEMORY 311

EP 3 070 946 A1

# FIG.9

START

|S301

PERFORM INTRA-SCREEN PREDICTION
PROCESS ON CODING TARGET BLOCK BY
USE OF PERIPHERAL PIXELS AND SELECT
OPTIMAL INTRA-SCREEN PREDICTION
MODE TO CALCULATE PREDICTED BLOCK

|S302

ACQUIRE FROM MEMORY INTRA-SCREEN
BLOCK PREDICTION VECTOR IN
PRECEDING FRAME AT SAME POSITION AS
CODING TARGET BLOCK

|S303

ARE CONDITIONS
1C TO 2C SATISFIED?

NO

YES

|S304

PERFORM INTRA-SCREEN BLOCK
PREDICTION PROCESS IN CODED REGION
OF CODING TARGET FRAME TO SEARCH
FOR OPTIMAL INTRA-SCREEN BLOCK
PREDICTION VECTOR

|S305

SEARCH FOR OPTIMAL INTRA-SCREEN
BLOCK PREDICTION VECTOR WITH INTRA-
SCREEN BLOCK PREDICTION VECTOR
ACQUIRED FROM MEMORY AS POSITION
FOR STARTING SEARCH

|S306

SAVE OPTIMAL INTRA-SCREEN BLOCK
PREDICTION VECTOR IN MEMORY

|S307

SELECT OPTIMAL PREDICTION METHOD
FROM BETWEEN INTRA-SCREEN
PREDICTION AND INTRA-SCREEN BLOCK
PREDICTION AND CALCULATE PREDICTED
ERROR BY SELECTED METHOD

END

# FIG.10

# FIG.11

EP 3 070 946 A1

IMAGE PROCESSING DEVICE — 40

CODING CONTROL UNIT — 16

BLOCK DIVISION UNIT — 11

ORTHOGONAL TRANSFORM UNIT — 13

QUANTIZATION UNIT — 14

VARIABLE-LENGTH CODING UNIT — 15

INTRA-SCREEN PREDICTION UNIT — 10a

INTER-SCREEN BLOCK PREDICTION UNIT — 10b

— 12

— 22

INVERSE QUANTIZATION UNIT — 17

INVERSE ORTHOGONAL TRANSFORM UNIT — 18

— 19

LOOP FILTER — 20

LOCALLY DECODED IMAGE MEMORY — 21

# FIG.12

# FIG.13

EP 3 070 946 A1

EP 3 070 946 A1

# FIG.14

# FIG.15

```
                    ┌──────────────┐
                    │    START     │
                    └──────┬───────┘
                           │              ⌐S10
        ┌──────────────────▼──────────────────┐
        │  PERFORM INTRA-SCREEN PREDICTION     │
        │  PROCESS ON CODING TARGET BLOCK BY   │
        │  USE OF PERIPHERAL PIXELS AND SELECT │
        │  OPTIMAL INTRA-SCREEN PREDICTION     │
        │  MODE TO CALCULATE PREDICTED BLOCK   │
        └──────────────────┬──────────────────┘
                           │              ⌐S11
        ┌──────────────────▼──────────────────┐
        │  PERFORM INTER-SCREEN BLOCK          │
        │  PREDICTION PROCESS IN REFERENCE     │
        │  FRAME OF INTER-SCREEN PREDICTION    │
        │  AND SELECT OPTIMAL INTER-SCREEN     │
        │  BLOCK PREDICTION VECTOR WITH        │
        │  LOWEST CODING COST                  │
        └──────────────────┬──────────────────┘
                           │              ⌐S12
        ┌──────────────────▼──────────────────┐
        │  SELECT INTRA-SCREEN BLOCK           │
        │  PREDICTION VECTOR IN CODED REGION   │
        │  OF CODING TARGET FRAME              │
        └──────────────────┬──────────────────┘
                           │              ⌐S13
        ┌──────────────────▼──────────────────┐
        │  SELECT OPTIMAL PREDICTION METHOD    │
        │  FROM AMONG INTRA-SCREEN             │
        │  PREDICTION, INTER-SCREEN BLOCK      │
        │  PREDICTION, AND INTRA-SCREEN BLOCK  │
        │  PREDICTION AND CALCULATE PREDICTED  │
        │  ERROR IN SELECTED METHOD            │
        └──────────────────┬──────────────────┘
                           │
                    ┌──────▼───────┐
                    │     END      │
                    └──────────────┘
```

**EUROPEAN SEARCH REPORT**

Europäisches Patentamt
European Patent Office
Office européen des brevets

Application Number

EP 16 15 9632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANG D ET AL: "Non-SCCE1: Intra block copy with modified motion vector predictor", 18. JCT-VC MEETING; 30-6-2014 - 9-7-2014; SAPPORO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-R0096-v2, 30 June 2014 (2014-06-30), XP030116351, * page 1 - page 2 * | 1-9 | INV. H04N19/56 |
| A | CHEN CHUN-CHI ET AL: "Screen content coding using non-square intra block copy for HEVC", 2014 IEEE INTERNATIONAL CONFERENCE ON MULTIMEDIA AND EXPO (ICME), IEEE, 14 July 2014 (2014-07-14), pages 1-6, XP032639288, DOI: 10.1109/ICME.2014.6890229 [retrieved on 2014-09-03] * paragraph [2.4.2] * | 1-9 | |
| A | ZHU L ET AL: "Initialization of block vector predictor for intra block copy", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0217, 4 January 2014 (2014-01-04), XP030115758, * page 1 - page 2 * | 1-9 | TECHNICAL FIELDS SEARCHED (IPC)<br><br>H04N |
| A,D | JP 2011 061302 A (HITACHI INT ELECTRIC INC) 24 March 2011 (2011-03-24) * figures 4-7 * | 1-9 | |

The present search report has been drawn up for all claims

| Place of search | Date of completion of the search | Examiner |
|---|---|---|
| Munich | 8 July 2016 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 15 9632

This annex lists the patent family members relating to the patent documents cited in  the above-mentioned European search report.
The members are as contained in the European Patent Office EDP file on
The European Patent Office is in no way liable for these particulars which are merely given for the purpose of information.

08-07-2016

| Patent document cited in search report | Publication date | Patent family member(s) | Publication date |
|---|---|---|---|
| JP 2011061302 A | 24-03-2011 | JP 5560009 B2<br>JP 2011061302 A | 23-07-2014<br>24-03-2011 |

For more details about this annex : see Official Journal of the European Patent Office, No. 12/82

EPO FORM P0459

**EP 3 070 946 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011061302 A